# EUROPEAN PATENT SPECIFICATION

(11) **EP 1 883 986 B1**
(45) Date of publication and mention of the grant of the patent: **21.09.2011**
(21) Application number: 06759482.0
(22) Date of filing: 10.05.2006
(51) Int. Cl.: H01M 8/14, H01M 8/02

(54) **ELECTROLYTE MATRIX FOR MOLTEN CARBONATE FUEL CELLS WITH IMPROVED PORE SIZE AND METHOD OF MANUFACTURING SAME**
ELEKTROLYTMATRIX FÜR SCHMELZCARBONAT-BRENNSTOFFZELLEN MIT VERBESSERTER PORENGRÖSSE UND HERSTELLUNGSVERFAHREN DAFÜR
MATRICE D'ELECTROLYTE POUR PILES A COMBUSTIBLE A CARBONATE FONDU PRESENTANT UNE TAILLE DE PORES AMELIOREE ET PROCEDE PERMETTANT DE PRODUIRE CELLE-CI

(30) Priority: 13.05.2005 US 128909
(43) Date of publication of application: 06.02.2008
(73) Proprietor: Fuelcell Energy, Inc., Danbury, CT 06813 (US)
(72) Inventor: XU, Gengfu, Danbury, CT 06810 (US); YUH, Chao-Yi, New Milford, CT 06776 (US)
(74) Representative: Gritschneder, Martin
(86) International application number: PCT/US2006/018066
(87) International publication number: WO 2006/124449

(56) References cited:
- US-A- 4 115 632
- US-A- 4 540 640
- US-A- 5 399 443
- US-A- 5 453 101
- US-A- 5 478 663
- US-A- 5 595 832
- US-A- 6 010 085
- US-A1- 2003 232 000
- US-B2- 6 544 467

## Description

### Background of the Invention

This invention relates to fuel cells and, in particular, to an electrolyte matrix for use in molten carbonate fuel cells.

A fuel cell is a device which directly converts chemical energy stored in hydrocarbon fuel into electrical energy by means of an electrochemical reaction. Generally, a fuel cell comprises an anode and a cathode separated by an electrolyte, which serves to conduct electrically charged ions. In order to produce a useful power level, a number of individual fuel cells are stacked in series with an electrically conductive separator plate between each cell.

Molten carbonate fuel cells ("MCFCs") operate by passing a reactant fuel gas through the anode, while oxidizing gas is passed through the cathode. The anode and the cathode of MCFCs are isolated from one another by a porous electrolyte matrix which is saturated with carbonate electrolyte. The matrix typically comprises a porous, unsintered y-LiAlO₂ ceramic powder bed impregnated with molten alkali carbonate electrolyte and provides ionic conduction and gas sealing. During MCFC operation, the matrix experiences both mechanical and thermal stresses which contribute to cracking or defects in the matrix. In order to provide effective gas sealing, the electrolyte matrix must have sufficient strength, mechanical integrity and materials endurance to withstand these stresses, particularly during thermal cycles of the MCFC. In particular, the matrix must be able to accommodate volume changes associated with carbonate melting and solidification during MCFC thermal cycling, to provide resistance to pressure differences across the matrix and to wet seal holding pressure over long periods of time, and must have slow or no pore growth over MCFC lifetime. Moreover, the matrix must have sufficient porosity and sub-micron pore distribution to ensure strong capillary forces so as to effectively retain electrolyte within its pores to prevent flooding of the electrodes and the drying out of the matrix.

Accordingly, various methods for strengthening the electrolyte matrix and for improving its electrolyte retention have been developed. For example, U.S. Patent No. 4,322,482 discloses use of "crack attenuator" particles having a larger size in the matrix to reduce through-cracking of the matrix. Another method of manufacturing an electrolyte matrix having increased strength and improved uniformity is disclosed in U.S. Patent No. 5,869,203, assigned to the same assignee herein. The '203 patent discloses a method of fabricating the electrolyte matrix comprising ceramic support material and an additive material employing a high-energy intensive milling technique of the support and additive materials to produce highly active particles of smaller size. In particular, the high-energy milling technique of the '203 patent is carried out by adding the additive material to a slurry of the support material and milling the slurry mixture such that the particle size of the additive is less than 0.5 µm. The matrix is then formed from the slurry mixture by a tape casting technique.

The high-energy milling technique of the '203 patent has been effective in increasing the strength and uniformity of the electrolyte matrix. However, particle packing and pore structure of the matrix fabricated using the conventional methods, including the method disclosed in the '203 patent, are significantly affected by the environmental conditions, and particularly by humidity, and the process conditions during the tape casting process as well as by variations in the raw matrix materials. For example, increased humidity leads to undesired non-uniform pore structure of the matrix which, in turn, has a negative effect on the strength of the matrix and its ability to retain electrolyte in its pores. This sensitivity of the tape casting process to the environmental and process conditions and to the raw materials variations often results in a variety of surface defects, cracking and non-uniform structure of the electrolyte matrix.

It is therefore an object of the present invention to provide an improved method of fabricating the electrolyte matrix having higher strength, greater particle packing and improved retention of electrolyte.

It is a further object of the invention to provide a method of fabricating the matrix which is less sensitive to environmental factors such as humidity, process conditions and raw materials variations.

### Summary of the Invention

In accordance with the principles of the present invention, the above and other objectives are realized in a method of making a matrix element for carrying a carbonate electrolyte comprising providing a carbonate electrolyte material, pre-milling the carbonate electrolyte material to form a pre-milled carbonate electrolyte having a particle size of less than 0.3 microns, providing a support material, mixing the pre-milled carbonate electrolyte with the support material using a milling technique to form a mixture, and forming the mixture into the matrix element.

The step of providing the carbonate electrolyte also includes dispersing the electrolyte in a predetermined amount of dispersant and the pre-milling is carried out with the carbonate electrolyte dispersed in the dispersant such as fish oil or one or more of Hypermer KD-series polymeric dispersants. The predetermined amount of dispersant is equal to 1 to 5% of carbonate electrolyte weight. The support material is LiAlO₂ and the carbonate electrolyte material is one or more of Li₂CO₃, K₂CO₃ and Na₂CO₃.

The method may further comprise providing one or more additive components to the mixture of pre-milled carbonate electrolyte and support material, wherein the additive components include at least one of a binder and a plasticizer. Acryloid binder and Santicizer® plasticizer may be used as the additive components. The forming of the matrix element is carried out by casting the mixture and then drying the casted mixture to form a tape element, and may further include heating the tape element to remove the dispersant from the tape element.

A fuel cell comprising an electrolyte matrix prepared according to this method is also disclosed.

### Brief Description of the Drawings

The above and other features and aspects of the present invention will become more apparent upon reading the following detailed description in conjunction with the accompanying drawings in which:
FIG. 1 shows a molten carbonate fuel cell using an electrolyte matrix in accordance with the principles of the present invention;
FIG. 2 shows a flow diagram of a method of fabricating the electrolyte matrix of FIG. 1 in accord with the invention;
FIG. 3 shows a graph of pore size distribution data of electrolyte matrix samples fabricated using the method of FIG. 2 and of electrolyte matrix tapes prepared using a conventional method;
FIG. 4 shows a bar graph of the bending strengths of electrolyte matrix samples formed from different types of LiAlO₂ powder prepared with and without pre-milling of electrolyte;
FIG. 5 shows a graph of pore size distributions of electrolyte matrix samples formed using the method of FIG. 2 from LiAlO₂ having different purity levels;
FIG. 6 shows a graph of pore size distribution data of electrolyte matrix samples tested at different humidity levels; and
FIG. 7 shows a graph of projected MCFC lifetime for conventional MCFCs and for MCFCs using an electrolyte matrix prepared using the method of FIG. 2.

### Detailed Description

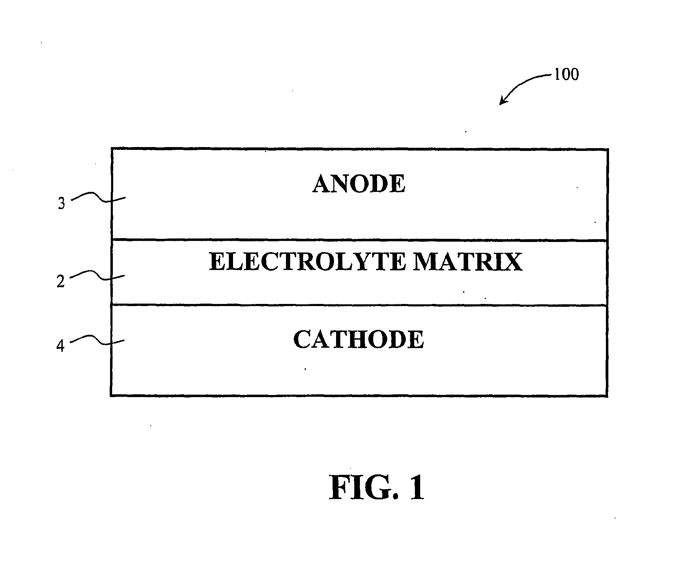

FIG. 1 shows a molten carbonate fuel cell 1 including an electrolyte matrix 2 fabricated in accordance with the principles of the present invention. The fuel cell 1 also includes an anode 3 and a cathode 4 which are separated from one another by the matrix 2. Fuel gas is fed to the anode 3 and oxidant gas is fed to the cathode 4. In the fuel cell, these gases undergo an electrochemical reaction in the presence of molten carbonate electrolyte present in the pores of the electrolyte matrix 2.

The matrix 2 comprises a support material, one or more additive components and carbonate electrolyte. The support material comprises a porous ceramic material having a sub-micron particle size. In this illustrative example, LiAlO₂, including γ-LiAlO₂, α-LiAlO₂ and β-LiAlO₂, are used as the support material. The additive components may include binder, plasticizer and other suitable materials. The electrolyte is disposed in the pores of the support material and comprises an alkali carbonate, such as Li₂CO₃, K₂CO₃ or Na₂CO₃. It is understood that other materials may be suitable for use in the electrolyte matrix 2 of the fuel cell.

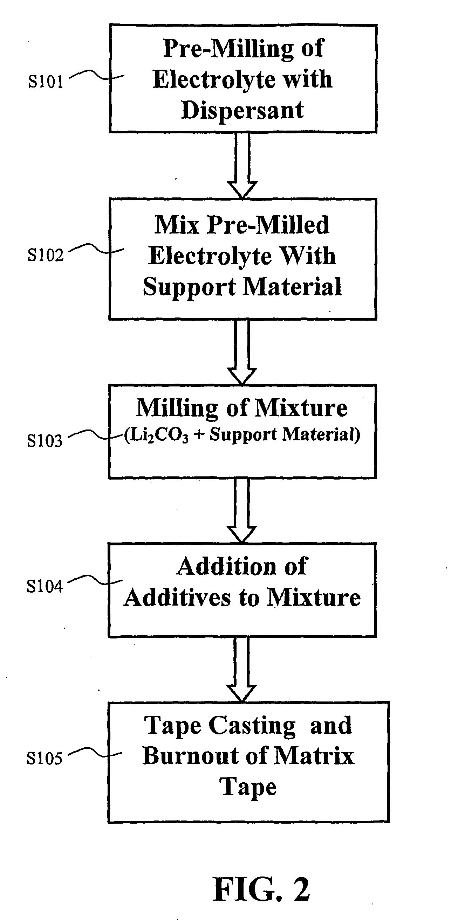

FIG. 2 shows a flow diagram of a method for fabricating the matrix 2 of FIG. 1 in accord with the principles of the present invention. As shown, in the first step S101 of the method, the carbonate electrolyte is pre-milled so that the mean particle size of the resulting pre-milled electrolyte is equal to or is smaller than the mean particle size of the ceramic support material. In this way, when the electrolyte is mixed with the support material in a further step of this method, the total surface area of the carbonate electrolyte particles will be equal to or greater than the total surface area of the support material particles. In particular, the desired mean particle size of the carbonate electrolyte should be less than 0.3 microns.

During the first step S101 of the method, any conventional milling method may be employed for pre-milling the carbonate electrolyte, including, but not limited to attrition milling and ball milling. The pre-milling conditions, such as the grinding media materials, size and loading of the grinding media and the grinding speed can be optimized to achieve a desired mean particle size of the pre-milled electrolyte, as well as a desired particle size distribution.

In addition, the pre-milling of the carbonate electrolyte may be accomplished in the presence of a dispersant. The dispersant is used to disperse the electrolyte so as to prevent re-agglomeration of electrolyte particles. Dispersants such as fish oil and one or more of Hypermer KD-series polymeric dispersants are suitable for dispersing electrolyte during the pre-milling process. The amount of dispersant used may be varied based on the targeted surface area of the pre-milled electrolyte.

In a second step S 102 of the method, the pre-milled electrolyte is mixed with the support material, which will form the body of the prepared electrolyte matrix 2 shown in FIG. 1. The support material typically comprises a ceramic material such as, for example, LiAlO₂.

In a third step S103, the mixture prepared in the second step S102 is milled for a predetermined period of time to break down any agglomerates present in the mixture and to form a slurry having the support material particles and the electrolyte particles uniformly dispersed throughout the slurry. The milling of the mixture can be accomplished using any conventional milling process, such as attrition milling, ball milling or fluid energy grinding.

In a fourth step S104, organic additives may be added to the slurry prepared in step S103 to prevent cracking of the matrix 2 prepared using this method. In particular, the cracking of the matrix may occur when the matrix is used in a fuel cell during operation as a result of the increased overall surface area of the matrix. These additives may include a binder and a plasticizer. For example, acryloid binder and Santicizer® 160 plasticizer are suitable for use as the organic components to be added to the slurry. The amount of organic additives added to the slurry may comprise approximately 10 to 30 % by weight of all solid components, i.e. electrolyte, support material and additives, of the slurry.

The slurry mixed with organic additives in the fourth step S104 is formed into one or more electrolyte matrix elements in a fifth step S105 of the matrix fabrication method. The electrolyte matrix elements may be formed by any suitable conventional technique. Tape casting is a preferred technique for forming the matrix element in which the slurry is tape cast using a doctor blade and then dried. The dry tape cast slurry results in a flat and flexible green tape having nearly theoretical as-cast green density and nearly 0% green porosity. The green tape then undergoes a burnout procedure during which the tape is heated to a predetermined temperature for a predetermined period of time to remove the dispersant by combustion and to produce a completed electrolyte matrix element. As can be appreciated, a plurality of green tapes may be prepared from the slurry to form multiple completed matrix elements.

The completed matrix element comprises the ceramic matrix 2 formed from the support material with the carbonate electrolyte particles dispersed in the matrix. The carbonate electrolyte particles define the pore sizes in the matrix. When the matrix element is used in the fuel cell, the electrolyte in the pores of the matrix melts during operation of the fuel cell to form liquid electrolyte, which is retained in the matrix by capillary forces of the pores.

The optimal components and fabrication of the matrix using the above method will be dependent on the particular application and requirements of the fuel cell. An illustrative example of fabricating an electrolyte matrix is described herein below.

### Example 1

In this illustrative example, LiAlO₂ is used as the support material in the matrix and Li₂CO₃ is the electrolyte material. The method shown in FIG. 2 and described above is used to fabricate matrix elements filled with electrolyte in accord with the invention. In the first step S 101, Li₂CO₃ is pre-milled to a mean particle size of less than 0.3 microns, and preferably 0.1 to 0.2 microns. Since a typical surface area of LiAlO₂ particles is 10 m²/g, the desired surface area of pre-milled Li₂CO₃ particles is about 10 m²/g. In this step, the Li₂CO₃ is pre-milled in the presence of a fish oil dispersant to prevent re-agglomeration of the Li₂CO₃ particles after the pre-milling step. The amount of fish oil used in this step is equal to approximately 1 to 5% of the weight of Li₂CO₃. In this case, an attrition milling technique using YTZ® grinding media having 2 to 6 mm ball size is employed to pre-mill Li₂CO₃ to the particle size between 0.1 and 0.2 microns. The grinding media loading is between 60 and 80%, and preferably about 70%, and the grinding speed is between 2,000 and 3,000 rpm.

In the second step S 102, the pre-milled Li₂CO₃ is mixed with the support material LiAlO₂ and in the third step S103, the resulting mixture is milled for approximately 2 hours to form a slurry. In step S103, the attrition milling technique is employed. During this step, any agglomerates present in the mixture are broken down and the Li₂CO₃ and LiAlO₂ particles are uniformly dispersed throughout the slurry.

In the next step S104, additives, including a binder and a plasticizer, are added to the slurry. In this example, acryloid binder and Santicizer® 160 plasticizer are used as the additives. The amount of these additives added to the slurry in this example is approximately 21 % by weight of all solid components, i.e. Li₂CO₃, LiAlO₂ and additives, of the slurry. The mixture of the slurry and the additives is then formed into electrolyte matrix elements using the tape casting technique. In particular, the slurry is tape cast using a doctor blade and dried at about 60° Celsius for 0.5 hours, to form a plurality of green tapes. These tapes are then heated to a temperature of about 400° Celsius for approximately 2 hours to remove the fish oil dispersant by combustion and to produce completed electrolyte matrix elements.

The electrolyte matrix elements fabricated using the above method have improved particle packing, unique narrow pore size distribution and significantly improved mechanical strength. The pore structure of these electrolyte matrix elements is more refined, having smaller mean pore size and narrower pore size distribution as compared with conventional electrolyte matrix. The smaller mean pore size and narrower pore size distribution contribute to the improved strength and endurance of the matrix during MCFC thermal cycling and to greater electrolyte retention by the matrix.

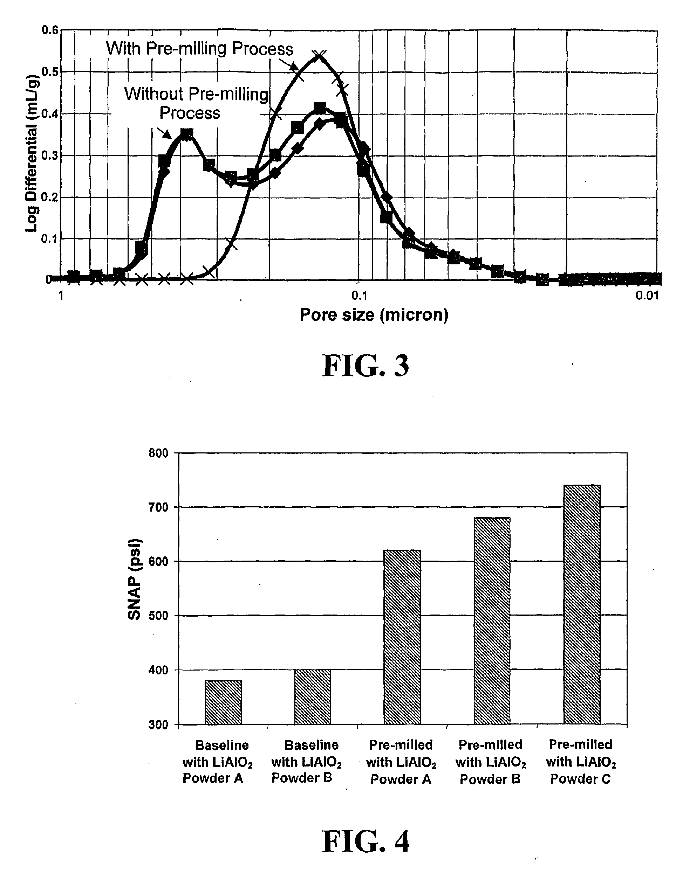

FIG. 3 shows a graph of pore size distribution data for electrolyte matrix tapes fabricated using the method of FIG. 2 and for conventional electrolyte matrix tapes prepared using the method described in the `203 patent. The matrix tapes prepared using either of these methods were formed from the same components. In particular, LiAlO₂ was used as the support material for the matrix tapes and Li₂CO₃ was used as the electrolyte. In FIG. 3, the X-axis represents the pore size of the matrix in microns, while the Y-axis represents a log differential for the cumulative pore volume in mL/g.

As shown, the conventional matrix tapes had a broad dual-peak pore size distribution with pores ranging between 0.04 and 0.6 microns in size. The conventional tapes had a frequent occurrence of larger pores having a pore size of about 0.5 microns as well as a large number of smaller pores having a pore size of about 0.14 microns. In contrast, the matrix tapes fabricated using the method of FIG. 2 employing pre-milling of Li₂CO₃ had a significantly narrower single-peak pore size distribution with pores ranging between 0.04 microns and 0.3 microns in size. The peak number of pores in these matrix tapes had a pore size of about 0.14 microns. As can be seen in FIG. 3, the pre-milling of Li₂CO₃ during fabrication of the electrolyte matrix resulted in the matrix having a smaller and more uniform pore size. In particular, it can be seen that the majority of larger pores with a pore size of about 0.5 microns were eliminated from the matrix. These improvements in the uniformity of the matrix porosity as well as the reduction in the mean pore size of the matrix are important for the mechanical integrity of the matrix and for electrolyte retention.

The bending strengths of electrolyte matrix tape samples formed with different types of LiAlO₂ and prepared using the conventional method or the method of FIG. 2 were tested. FIG. 4 shows a bar graph of the bending strengths of matrix tapes formed from different types of LiAlO₂ powder which were prepared with or without the pre-milling of Li₂CO₃. As shown, the bending strengths of the conventional electrolyte matrix samples formed with α-LiAlO₂ having 94% purity, 0.15 micron primary particle size and 10 m²/g surface area (Powder A) and α-LiAlO₂ having 96% purity, 0.11 micron primary particle size and 11 m²/g surface area (Powder B) were approximately 380 psi and 400 psi, respectively. As also shown, the bending strength of an electrolyte matrix sample prepared using the method of FIG. 2 with Powder A was about 625 psi, the bending strength of a sample prepared using the method of FIG. 2 with Powder B was about 680 psi and the bending strength of a sample prepared using the method of FIG. 2 with α-LiAlO₂ having 100% purity, 0.1 micron primary particle size and 18 m²/g surface area (Powder C) was about 730 psi. It can thus be seen that the pre-milling of Lᵢ2CO₃ results in a substantial increase in the bending strength of the electrolyte matrix, thereby improving the mechanical integrity of the matrix during MCFC operation and thermal cycling.

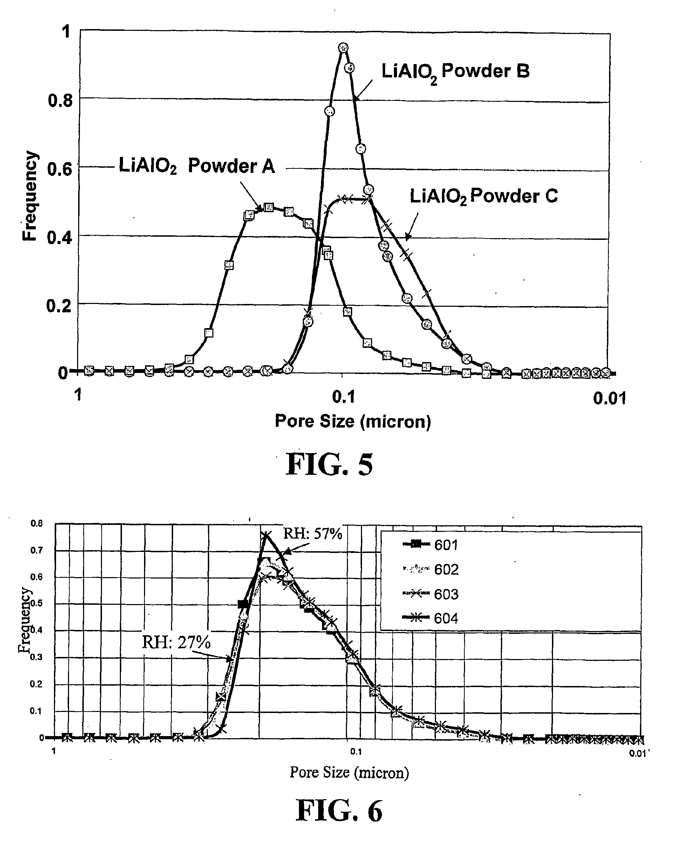

The effect of purity and surface area of the LiAlO₂ support material in the electrolyte matrix samples fabricated using the above method (with pre-milling of Li₂CO₃) was also tested. The electrolyte matrix samples for these tests were formed with LiAlO₂ powder having 94% purity (Powder A), 96% purity (Powder B) or 100% purity (Powder C). The surface areas of Powder A, Powder B and Powder C were 10 m²/g, 11 m²/g and 18 m²/g, respectively. FIG. 5 shows a graph of pore size distribution data for the electrolyte matrix samples tested. In FIG. 5, the X-axis represents the pore size in microns, while the Y-axis represents a relative frequency of occurrence.

As shown, the electrolyte matrix samples prepared with Powder A had a pore size distribution between 0.08 and 0.5 microns, with the most frequently occurring pores being in the pore size range between 0.1 and 0.3 microns. The electrolyte matrix samples prepared with Powder B or Powder C had a pore size distribution between 0.05 and 0.2 microns. The majority of the pores in the sample prepared with Powder B had a pore size of approximately 0.1 microns. In the sample prepared with Powder C, the most frequently occurring pore sizes were between 0.07 and 0.2. As can be seen, the pre-milling of Li₂CO₃ during the fabrication of the samples eliminated the dual-peak pore size distribution, regardless of the purity of the LiAlO₂ support material and resulted in a narrower, and thus more uniform, pore size distribution in each of the samples.

The effect of environmental humidity during the tape casting step S 104 on the pore size distribution in the electrolyte matrix samples prepared using the method of FIG. 2 was also tested. The electrolyte matrix samples were formed with LiAlO₂ support materials at 27% and 57% humidity levels.

FIG. 6 shows a graph of pore size distribution data of the electrolyte matrix samples 601-604 formed at these humidity levels. The samples 601, 602 and 603 were each formed with LiAlO₂ powder having 94% purity (Powder A) using the tape casting technique at 27% relative humidity, while sample 604 was formed with Powder A by tape casting at 57% relative humidity. As shown, the pore size distribution of each of the samples 601-604 was between 0.03 and 0.3 with the peak number of pores having a size of approximately 0.19 microns. When the humidity during the tape casting process was increased from 27% to 57%, the pore size distribution of the completed matrix elements remained about the same as the pore size distribution of the samples formed at 27% humidity. Accordingly, it can be seen that the environmental humidity during the tape casting process has little or no effect on the pore size distribution, and thus on the mechanical integrity and electrolyte retention characteristics, of the completed electrolyte matrix samples fabricated using the method of FIG. 2.

As can be appreciated, the lifetime of the MCFC is affected by a variety of factors including loss of electrolyte, the drying out of the matrix, the strength of the matrix and its gas sealing capacity. In particular, pores having a size greater than 0.3 microns in conventional electrolyte matrices contribute to a loss of approximately 30% of the electrolyte stored in the matrix. Accordingly, smaller pores and more uniform porosity of the matrix fabricated in accordance with the present invention significantly reduce the loss of electrolyte from the matrix, preventing the drying out of the matrix and a possible cross-over of the fuel and oxidant gases. Moreover, the improved strength and characteristics of the electrolyte matrix prepared as shown in FIG. 2 significantly reduce the risk of cracking of the matrix. Therefore, the improvements in the electrolyte matrix fabricated in accord with the invention increase the operating life of MCFCs.

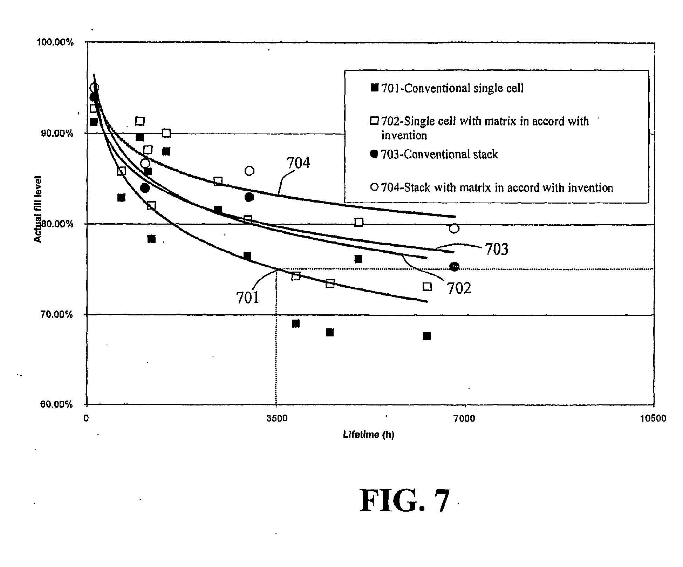

FIG. 7 shows a graph of projected MCFC lifetime for single-cell MCFCs and MCFC stacks using conventional electrolyte matrices and for single-cell MCFCs and stacks using electrolyte matrices prepared using the method of FIG. 2. In FIG. 7, the X-axis represents the lifetime of the fuel cell in hours, while the Y-axis represents the actual electrolyte fill level of the fuel cells. The lifetimes of MCFCs and stacks were determined based on the fill level of the Li₂CO₃ electrolyte in the cells, with a minimum electrolyte fill level required for MCFC operation being about 75%. As shown, in a conventional single-cell MCFC 701, the minimum electrolyte fill level was reached after about 3,500 hours of operation, this operating time representing a projected lifetime of conventional single-cell MCFCs. The projected lifetime of single-cell MCFCs 702 which employed electrolyte matrices fabricated using the method of FIG. 2 was increased to about 6,900 hours due to the improved electrolyte retention of these cells. A similar increase in a projected lifetime can be seen for MCFC stacks. In particular, the lifetime of conventional MCFC stacks 703 is approximately 14,000 hours, while the lifetime of MCFC stacks 704 with the matrices prepared using pre-milling of the electrolyte is about 28,000 hours. As can be seen from these results, the improved electrolyte retention by electrolyte matrices fabricated in accord with the invention results in nearly doubling the operating life of the MCFC cells and stacks. The improvements in the strength of the matrix and the reduced risk of matrix cracking also contribute to extending the lifetime of MCFCs.

In all cases it is understood that the above-described arrangements are merely illustrative of the many possible specific embodiments which represent applications of the present invention.

## Claims

1. A method of making a matrix element for carrying a carbonate electrolyte comprising:
providing a carbonate electrolyte material;
pre-milling said carbonate electrolyte material to form pre-milled carbonate electrolyte having a particle size of less than 0.3 microns;
providing a support material;
mixing said pre-milled carbonate electrolyte with said support material using a milling technique to form a mixture; and
forming said mixture into said matrix element.

2. A method of making a matrix element in accordance with claim 1, wherein said support material is LiAlO₂.

3. A method of making a matrix element in accordance with claim 1, wherein said carbonate electrolyte material is one or more of Li₂CO₃, K₂CO₃ and Na₂CO₃.

4. A method of making a matrix element in accordance with claim 1, wherein providing said carbonate electrolyte includes dispersing said electrolyte in a predetermined amount of dispersant and said pre-milling is carried out with said carbonate electrolyte dispersed in said dispersant.

5. A method of making a matrix element in accordance with claim 4, wherein said predetermined amount of said dispersant is equal to 1 to 5% of carbonate electrolyte weight.

6. A method of making a matrix element in accordance with claim 5, wherein said dispersant is one of fish oil and Hypermer KD-series polymeric dispersant.

7. A method of making a matrix element in accordance with claim 4, wherein said method further comprises providing at least one additive component to said mixture of said pre-milled carbonate electrolyte and said support material.

8. A method of making a matrix element in accordance with claim 7, wherein said additive components include at least one of a binder and a plasticizer.

9. A method of making a matrix element in accordance with claim 8, wherein said binder comprises acryloid binder and said plasticizer comprises a Santicizer® 160 plasticizer.

10. A method of making a matrix element in accordance with claim 1, wherein said forming of said matrix element includes casting said mixture and then drying said casted mixture to form a tape element.

11. A method of making a matrix element in accordance with claim 10, wherein said forming further includes heating said tape element to remove said dispersant from said tape element.

12. A method of making a matrix element in accordance with claim 1, wherein said pre-milling of said carbonate electrolyte includes pre-milling of said electrolyte to a particle size of 0.1 to 0.2 microns.

13. A method of making a matrix element in accordance with claim 12, wherein a surface area of said support material is 10 m²/g and a surface area of said pre-milled carbonate electrolyte is 10 m²/g.

14. A method of making a matrix element in accordance with claim 12, wherein said pre-milling of said carbonate electrolyte comprises attrition milling.

15. A method of making a matrix element in accordance with claim 14, wherein said attrition milling is carried out using YTZ® grinding media having a ball size between 2 and 6 mm at a grinding media loading between 60 and 80% and a grinding speed between 2,000 and 3,000 rpm.

16. A method of making a matrix element in accordance with claim 15, wherein said grinding media loading is 70%.

17. A method of making a matrix element in accordance with claim 15, wherein:
providing said carbonate electrolyte includes dispersing said electrolyte in a predetermined amount of dispersant and said pre-milling is carried out with said carbonate electrolyte dispersed in said dispersant; said forming of said matrix element includes casting said mixture, then drying said casted mixture to form a tape element including heating said tape element to remove said dispersant from said tape element; and wherein said carbonate electrolyte is Li₂CO₃ and said dispersant is fish oil, and wherein said heating of said matrix element includes heating said element to 400° Celsius for 2 hours.

18. A fuel cell comprising:
an anode section;
a cathode section;
an electrolyte matrix disposed between said anode section and said cathode section, said electrolyte matrix comprising at least a support material; and
a carbonate electrolyte disposed within said matrix;
wherein the matrix has a narrow single-peak pore size distribution with pores ranging between 0.04 microns and 0.3 microns in size; and
wherein said matrix is formed using a method of any of claims 1-17.

19. A fuel cell in accordance with claim 18, dependent on claim 9 wherein said carbonate electrolyte is Li₂CO₃ and said dispersant is fish oil, and wherein said pre-milling of said Li₂CO₃ is carried out using one of said attrition milling, ball milling and fluid energy grinding and wherein an amount of said dispersant is equal to 1 to 5% of carbonate electrolyte weight.

20. A fuel cell in accordance with claim 19, wherein said pre-milling is attrition milling carried out using YTZ® grinding media having a ball size between 2 and 6 mm at a grinding media loading between 60 and 80% and a grinding speed between 2,000 and 3,000 rpm, and wherein said heating of said tape element includes heating said element to 400 °Celsius for 2 hours.

## Patentansprüche

1. Verfahren zur Herstellung eines Matrixelements, das dazu dient, einen Carbonatelektrolyten zu tragen, umfassend:
Bereitstellen eines Carbonatelektrolytmaterials;
Vormahlen des Carbonatelektrolytmaterials, um vorgemahlenen Carbonatelektrolyten mit einer Teilchengröße von weniger als 0,3 Mikrometer zu bilden;
Bereitstellen eines Trägermaterials;
Mischen des vorgemahlenen Carbonatelektrolyten mit dem Trägermaterial unter Verwendung einer Mahltechnik, um eine Mischung zu bilden; und
Bilden der Mischung zu dem Matrixelement.

2. Verfahren zur Herstellung eines Matrixelements nach Anspruch 1, bei dem das Trägermaterial LiAlO₂ ist.

3. Verfahren zur Herstellung eines Matrixelements nach Anspruch 1, bei dem das Carbonatelektrolytmaterial eines oder mehreres ist von Li₂CO₃, K₂CO₃ und Na₂CO₃.

4. Verfahren zur Herstellung eines Matrixelements nach Anspruch 1, bei dem Bereitstellen des Carbonatelektrolyten Dispergieren des Elektrolyten in einer vorbestimmten Menge von Dispergiermittel umfasst und das Vormahlen mit dem in dem Dispergiermittel dispergierten Carbonatelektrolyten durchgeführt wird.

5. Verfahren zur Herstellung eines Matrixelements nach Anspruch 4, bei dem die vorbestimmte Menge des Dispergiermittels gleich 1 bis 5 Gew.-% Carbonatelektrolyt ist.

6. Verfahren zur Herstellung eines Matrixelements nach Anspruch 5, bei dem das Dispergiermittel eines ist von Fischöl und Polymer-Dispergiermittel der Hypermer KD-Serie.

7. Verfahren zur Herstellung eines Matrixelements nach Anspruch 4, wobei das Verfahren weiter umfasst: Bereitstellen mindestens einer Zusatzkomponente zu der Mischung des vorgemahlenen Carbonatelektrolyten und des Trägermaterials.

8. Verfahren zur Herstellung eines Matrixelements nach Anspruch 7, bei dem die Zusatzkomponenten mindestens eines von einem Bindemittel und einem Weichmacher umfassen.

9. Verfahren zur Herstellung eines Matrixelements nach Anspruch 8, bei dem das Bindemittel Acryloid-Bindemittel umfasst und der Weichmacher einen Santicizer® 160-Weichmacher umfasst.

10. Verfahren zur Herstellung eines Matrixelements nach Anspruch 1, bei dem das Bilden des Matrixelements umfasst: Gießen der Mischung und dann Trocknen der gegossenen Mischung, um ein Bandelement zu bilden.

11. Verfahren zur Herstellung eines Matrixelements nach Anspruch 10, bei dem das Bilden weiter umfasst: Erwärmen des Bandelements, um das Dispergiermittel von dem Bandelement zu entfernen.

12. Verfahren zur Herstellung eines Matrixelements nach Anspruch 1, bei dem das Vormahlen des CarbonaLelektrolyten umfasst: Vormahlen des Elektrolyten zu einer Teilchengröße von 0,1 bis 0,2 Mikrometer.

13. Verfahren zur Herstellung eines Matrixelements nach Anspruch 12, bei dem ein Flächeninhalt des Trägermaterials 10 m²/g ist und ein Flächeninhalt des vorgemahlenen Carbonatelektrolyten 10 m²/g ist.

14. Verfahren zur Herstellung eines Matrixelements nach Anspruch 12, bei dem das Vormahlen des Carbonatelektrolyten ein Reibungsmahlen umfasst.

15. Verfahren zur Herstellung eines Matrixelements nach Anspruch 14, bei dem das Reibungsmahlen unter Verwendung von YTZ®-Mahlkörpern mit einer Kugelgröße zwischen 2 und 6 mm bei einer Mahlkörperbeschickung zwischen 60 und 80% und einer Mahlgeschwindigkeit zwischen 2000 und 3000 U/min durchgeführt wird.

16. Verfahren zur Herstellung eines Matrixelements nach Anspruch 15, bei dem die Mahlkörperbeschickung 70% beträgt.

17. Verfahren zur Herstellung eines Matrixelements nach Anspruch 15, bei dem: Bereitstellen des Carbonatelektrolyten Dispergieren des Elektrolyten in einer vorbestimmten Menge von Dispergiermittel umfasst und das Vormahlen mit dem in dem Dispergiermittel dispergierten Carbonatelektrolyten du-chgeführt wird; das Bilden des Matrixelements umfasst: Gießen der Mischung, dann Trocknen der gegossenen Mischung, um ein Bandelement zu bilden, einschließlich Erwärmen des Bandelements, um das Dispergiermittel von dem Bandelement zu entfernen; und bei dem der Carbonatelektrolyt Li₂CO₃ ist und das Dispergiermittel Fischöl ist und bei dem das Erwärmen des Matrixelements ein 2 Stunden langes Erwärmen des Elements auf 400°C umfasst.

18. Brennstoffzelle, umfassend:
einen Anodenabschnitt;
einen Kathodenabschnitt;
eine Elektrolytmatrix, die zwischen dem Anodenabschnitt und dem Kathodenabschnitt angeordnet ist, wobei die Elektrolytmatrix mindestens ein Trägermaterial umfasst; und
einen Carbonatelektrolyten, der in der Matrix angeordnet ist;
wobei die Matrix eine enge Einzelpeak-Porengrößenverteilung mit Poren aufweist, die an Größe zwischen 0,04 Mikrometer und 0,3 Mikrometer variieren; und
wobei die Matrix unter Verwendung eines Verfahrens nach einem der Ansprüche 1-17 gebildet ist.

19. Brennstoffzelle nach Anspruch 18, abhängig von Anspruch 9, bei der der Carbonatelektrolyt Li₂CO₃ ist und das Dispergiermittel Fischöl ist und bei der das Vormahlen des Li₂CO₃ unter Verwendung eines von dem Reibungsmahlen, Kugelmahlen und Mahlen mit einer Strahlmühle durchgeführt ist und bei der eine Menge des Dispergiermittels gleich 1 bis 5 Ges.-% Carbonatelektrolyt ist.

20. Brennstoffzelle nach Anspruch 19, bei der das Vormahlen ein Reibungsmahlen ist, das unter Verwendung von YTZ®-Mahlkörpern mit einer Kugelgröße zwischen 2 und 6 mm bei einer Mahlkörperbeschickung zwischen 60 und 80% und einer Mahlgeschwindigkeit zwischen 2000 und 3000 U/min durchgeführt ist, und bei der das Erwärmen des Bandelements ein 2 Stunden langes Erwärmen des Elements auf 400°C umfasst.

## Revendications

1. Procédé de fabrication d'un élément matriciel destiné à porter un électrolyte de carbonate comprenant :
la fourniture d'un matériau d'électrolyte de carbonate ;
le prébroyage dudit matériau d'électrolyte de carbonate afin de former un électrolyte de carbonate prébroyé d'une grosseur de particules de moins de 0,3 microns ;
la fourniture d'un matériau de support ;
le mélange dudit électrolyte de carbonate prébroyé avec ledit matériau de support au moyen d'une technique de broyage afin de former un mélange ; et
la formation dudit mélange en ledit élément matriciel.

2. Procédé de fabrication d'un élément matriciel selon la revendication 1, dans lequel ledit matériau de support est LiAlO₂.

3. Procédé de fabrication d'un élément matriciel selon la revendication 1, dans lequel ledit matériau d'électrolyte de carbonate est l'un ou plusieurs de Li₂CO₃, K₂CO₃ et Na₂CO₃.

4. Procédé de fabrication d'un élément matriciel selon la revendication 1, dans lequel la fourniture dudit électrolyte de carbonate comporte la dispersion dudit électrolyte dans une quantité prédéterminée de dispersant et ledit prébroyage est effectué avec ledit électrolyte de carbonate dispersé dans ledit dispersant.

5. Procédé de fabrication d'un élément matriciel selon la revendication 4, dans lequel ladite quantité prédéterminée dudit dispersant est égale à 1 à 5 % d'électrolyte de carbonate en poids.

6. Procédé de fabrication d'un élément matriciel selon la revendication 5, dans lequel ledit dispersant est l'un d'huile de poisson et de dispersant polymère Hypermer série KD.

7. Procédé de fabrication d'un élément matriciel selon la revendication 4, comprenant en outre la fourniture d'au moins un composant additif audit mélange dudit électrolyte de carbonate prébroyé et dudit matériau de support.

8. Procédé de fabrication d'un élément matriciel selon la revendication 7, dans lequel lesdits composants additifs comportent au moins l'un d'un liant et d'un plastifiant.

9. Procédé de fabrication d'un élément matriciel selon la revendication 8, dans lequel ledit liant comprend un liant d'acryloïde et ledit plastifiant comprend un plastifiant Santicizer® 160.

10. Procédé de fabrication d'un élément matriciel selon la revendication 1, dans lequel ladite formation dudit élément matriciel comporte la coulée dudit mélange puis le séchage dudit mélange coulé afin de former un élément de ruban.

11. Procédé de fabrication d'un élément matriciel selon la revendication 10, dans lequel ladite formation comporte en outre le chauffage dudit élément de ruban afin d'éliminer ledit dispersant dudit élément de ruban

12. Procédé de fabrication d'un élément matriciel selon la revendication 1, dans lequel ledit prébroyage dudit électrolyte de carbonate comporte le prébroyage dudit électrolyte à une grosseur de particules de 0,1 à 0,2 microns.

13. Procédé de fabrication d'un élément matriciel selon la revendication 12, dans lequel une superficie dudit matériau de support est de 10 m²/g et une superficie dudit électrolyte de carbonate prébroyé est de 10 m² /g.

14. Procédé de fabrication d'un élément matriciel selon la revendication 12, dans lequel ledit prébroyage dudit électrolyte de carbonate comprend le broyage par attrition.

15. Procédé de fabrication d'un élément matriciel selon la revendication 14, dans lequel ledit broyage par attrition est effectué en utilisant des corps de broyage YTZ® ayant une grosseur de billes entre 2 et 6 mm à une charge de corps de broyage entre 60 et 80% et une vitesse de broyage entre 2000 et 3000 tr/min.

16. Procédé de fabrication d'un élément matriciel selon la revendication 15, dans lequel ladite charge du corps de broyage est 70%.

17. Procédé de fabrication d'un élément matriciel selon la revendication 15, dans lequel :
la fourniture dudit électrolyte de carbonate comporte la dispersion dudit électrolyte dans une quantité prédéterminée de dispersant et ledit prébroyage est effectué avec ledit électrolyte de carbonate dispersé dans ledit dispersant ; ladite formation dudit élément matriciel comporte la coulée dudit mélange, puis le séchage dudit mélange coulé afin de former un élément de ruban comportant le chauffage dudit élément de ruban afin d'éliminer ledit dispersant dudit élément de ruban ; et dans lequel ledit électrolyte de carbonate est Li₂CO₃ et ledit dispersant est de l'huile de poisson, et dans lequel ledit chauffage dudit élément matriciel comporte le chauffage dudit élément à 400°Celsius pendant 2 heures.

18. Pile à combustible comprenant:
une section d'anode ;
une section de cathode ;
une matrice d'électrolyte disposé entre ladite section d'anode et ladite section de cathode, ladite matrice d'électrolyte comprenant au moins un matériau de support ; et
un électrolyte de carbonate disposé à l'intérieur de ladite matrice ;
dans laquelle la matrice a une répartition volumétrique des pores à pic unique étroit avec des pores mesurant entre 0,04 microns et 0,3 microns ; et
dans laquelle ladite matrice est formée par un procédé selon l'une quelconque des revendications 1 à 17.

19. Pile à combustible selon la revendication 18, dépendant de la revendication 9, dans laquelle ledit électrolyte de carbonate est Li₂CO₃ et ledit dispersant est de l'huile de poisson, et dans laquelle ledit prébroyage dudit Li₂CO₃ est effectué en utilisant l'une des opérations de broyage par attrition, broyage à billes et broyage par énergie fluidique et dans laquelle une quantité dudit dispersant est égale à 1 à 5% de poids d'électrolyte de carbonate.

20. Pile à combustible selon la revendication 19, dans lequel ledit prébroyage est un broyage par attrition effectué en utilisant des corps de broyage YTZ® ayant une grosseur de billes entre 2 et 6 mm à une charge de corps de broyage entre 60 et 80% et une vitesse de broyage entre 2000 et 3000 tr/min et dans laquelle ledit chauffage dudit élément de ruban comporte le chauffage dudit élément à 400° Celsius pendant 2 heures.
